# EUROPÄISCHE PATENTSCHRIFT

(11) **EP 2 880 659 B1**
(45) Veröffentlichungstag und Bekanntmachung des Hinweises auf die Patenterteilung: **24.08.2016**
(21) Anmeldenummer: 13739371.6
(22) Anmeldetag: 24.06.2013
(51) Int. Cl.: G21C 9/004, G21C 19/28, G21D 3/06, G21C 9/06, G21C 13/02, G21C 19/30

(54) **CONTAINMENT-SCHUTZSYSTEM FÜR EINE KERNTECHNISCHE ANLAGE UND ZUGEHÖRIGES BETRIEBSVERFAHREN**
CONTAINMENT PROTECTION SYSTEM FOR A NUCLEAR FACILITY AND ASSOCIATED OPERATING METHOD
SYSTÈME DE PROTECTION DU CONFINEMENT D'UNE INSTALLATION NUCLÉAIRE ET PROCÉDÉ D'EXPLOITATION CORRESPONDANT

(30) Priorität: 01.08.2012 DE 102012213614
(43) Veröffentlichungstag der Anmeldung: 10.06.2015
(73) Patentinhaber: AREVA GmbH, 91052 Erlangen (DE)
(72) Erfinder: HILL, Axel, 64589 Stockstadt (DE); LOSCH, Norbert, 63067 Offenbach (DE)
(74) Vertreter: Kugler, Jörg
(86) Internationale Anmeldenummer: PCT/EP2013/063153
(87) Internationale Veröffentlichungsnummer: WO 2014/019770

(56) Entgegenhaltungen:
- EP-A2- 2 099 032
- DE-U1- 8 816 558
- US-A- 5 392 325

## Beschreibung

Die Erfindung betrifft ein Containment-Schutzsystem zur Behandlung der im Containment einer kerntechnischen Anlage, insbesondere eines Kernkraftwerks, befindlichen Atmosphäre bei kritischen Störfällen mit massiver Freisetzung von Wasserstoff und Dampf. Die Erfindung betrifft weiterhin ein Verfahren zum Betreiben eines derartigen Systems.

Ein Containment-Schutzsystem gemäß dem Oberbegriff des Anspruchs 1 ist aus EP 2 099 032 A2 bekannt.

Bei einem schweren Störfall (engl. Severe Accident) in einer kerntechnischen Anlange, insbesondere einem Kernkraftwerk, kann es neben der Freisetzung von Dampf zur Freisetzung großer Mengen an Wasserstoff kommen, insbesondere durch die bekannte Zirkon-Wasser-Reaktion an überhitzen Brennstabhüllrohren. Ohne Gegenmaßnahmen sind explosive (auch detonationsfähige) Gemische, die bei einer unkontrollierten Reaktion die Integrität des üblicherweise als Containment bezeichneten Sicherheitseinschlusses gefährden, nicht auszuschließen.

Des Weiteren kommt es insbesondere bei kleineren inertisierten Siedewasserreaktor-Containments (mit einem Volumen von etwa 5.000 bis 15.000 m³) durch die Freisetzung des nicht-kondensierbaren Wasserstoffs zusammen mit Dampf zu einem schnellen Druckanstieg, der über den Auslegungsdruck der Sicherheitshülle hinausgehen und bis hin zum Versagensdruck gehen kann.

Bisher wurde in einigen Fällen als wirksame Gegenmaßnahme das Containment mit einem System zur gefilterten Druckentlastung (Venting) ausgerüstet. Hierbei kommt es jedoch zu einer Freisetzung in die Umgebung. Wenngleich bei Anwendung moderner Reinigungs- und Filterungskonzepte der Austrag von Radioaktivität ausgesprochen gering ist, ist dieses Verhalten prinzipiell unerwünscht.

Innerhalb des Containments von Druckwasserreaktor-Anlagen befinden sich häufig sogenannte passive autokatalytische Rekombinatoren (PARs), die jedoch bei inertisierten Siedewasserreaktor-Anlagen ihre Wasserstoff-Abbaufunktion nach Aufbrauchen des für die Rekombinationsreaktion notwendigen Sauerstoffs einbüßen. Bei dem überwiegenden Teil der Siedewasserreaktor-Anlagen älterer Bauart sind die installierten Wasserstoff-Abbausysteme nur für Auslegungsstörfälle niedrigen bis mittleren Schweregrades konzipiert, so dass deren Abbauleistung für schwere Störfälle bis hin zu Kernschmelzszenarien nicht ausreichend ist.

Aufgabe der vorliegenden Erfindung ist es, ein Containment-Schutzsystem anzugeben, welches die genannten Nachteile bisheriger Lösungen vermeidet und auch bei inertisierten Containments in der Lage ist, Überdruckzustände sowie kritische Ansammlungen von Wasserstoff auf überwiegend passive Weise und möglichst ohne Belastung der Umgebung effektiv und schnell abzubauen. Er soll weiterhin ein besonders vorteilhaftes Verfahren zum Betreiben eines derartigen Systems angegeben werden.

Die auf die Vorrichtung gerichtete Aufgabe wird erfindungsgemäß gelöst durch die Merkmale des unabhängigen Patentanspruchs 1. Die auf das Verfahren gerichtete Aufgabe wird erfindungsgemäß gelöst durch die Merkmale des nebengeordneten Patentanspruchs 15.

Vorteilhafte Ausgestaltungen und Varianten sind Gegenstand der Unteransprüche und gehen im Übrigen aus der detaillierten Figurenbeschreibung hervor.

Mit dem erfindungsgemäßen Containment-Schutzsystem kann der Wasserstoff im Containment kurzfristig abgebaut werden sowie ein Überdruckversagen des Containments durch die Freisetzung von Dampf und von großen Wasserstoffmengen verhindert werden, ohne dass es zu einer Freisetzung von radioaktiven Stoffen in die Umgebung kommt.

Mit dem kombinierten Verfahren der rekuperativen Hochgeschwindigkeits-Mehrstufenoxidation und integrierter Reinigungsstufe / Wäschereinheit mit Dampfkondensation kann die Wasserstoff- und Dampfkonzentration im Containment bei gleichzeitiger Druckabsenkung erfolgen.

Das System wird hierzu in einem Kreislauf an das Containment angeschlossen, so dass es bei Betrieb zu keiner absichtlichen Freisetzung von Spaltprodukten kommt. Durch die Wasserstoff-Rekombination mit Sauerstoff zu Wasserdampf und dessen Kondensation kommt es zu einer schnellen Druckabsenkung im Containment. Diese Druckabsenkung wird verstärkt, indem der im Containment befindliche Dampf ebenfalls in der Reinigungsstufe niedergeschlagen wird. In der Wäscherstufe wird die Aktivität gesammelt und kann von hieraus gezielt in die druckführende Umschließung des Containments zurückgespeist werden oder einer Anlage für Behandlung radioaktiver Abwässer zugeführt werden.

Wesentliche Vorteile des erfindungsgemäßen Systems lassen sich wie folgt zusammenfassen.
- Das System kann ohne radioaktive Emission von Spaltprodukten an die Umgebung arbeiten.
- Eine alternative gefilterte Druckentlastung ist jederzeit möglich, um das Versagen des Sicherheitsbehälters zu jeder Zeit sicher auszuschließen.
- Das Reaktorgebäude wird durch den bei der Dampfkondensation als Kühlmittel verwendeten Stickstoff inertisiert, um eine durch Wasserstoff-Leckagen außerhalb des Containments verursachte Zündung zu verhindern.
- Insbesondere bei inertisierten Siedewasserreaktor-Containments kann ein Überdruckversagen des Sicherheitsbehälters verhindert und zugleich die Wasserstoff-Problematik ohne Emission in die Umgebung gelöst werden.
- Laufende Altanlagen können bezüglich der geschilderten Probleme auf das Sicherheitsniveau des Anlagendesigns neuerer Generation (GEN3+) angehoben werden.
- Die Nachrüstung von Altanlagen, insbesondere der mobile Einsatz in Notfällen, wird durch den modularen Aufbau in Containerbauweise unterstützt.
- Das System kommt durch den rekuperativen Charakter und die konsequente Nutzung von bei einem kritischen Störfall im Containment vorhandener Energie mit einem geringen Maß an externer elektrischer Hilfsenergie aus und arbeitet weitgehend passiv.
- Die elektrische Hilfsenergie kann problemlos durch wiederaufladbare Batterien, ggf. in Verbindung mit kleinen, mobilen Diesel-Notstromaggregaten, Brennstoffzellen oder dergleichen, bereitgestellt werden kann.

Verschiedene Ausführungsbeispiele der Erfindung werden nachfolgend anhand von Zeichnungen näher erläutert. Darin zeigen in jeweils vereinfachter und schematischer Darstellung:
- FIG. 1: eine erste Variante eines Containment-Schutzsystems zum Druckabbau und zum Wasserstoffabbau in einem Containment einer kerntechnischen Anlage bei kritischen Störfällen,
- FIG. 2: einen Siedewasserreaktor mit einem angeschlossenen Containment-Schutzsystem gemäß FIG. 1,
- FIG. 3: eine zweite Variante eines Containment-Schutzsystems,
- FIG. 4: eine dritte Variante eines Containment-Schutzsystems, und
- FIG. 5: eine vierte Variante eines Containment-Schutzsystems.

Gleiche oder gleich wirkende Teile sind jeweils mit denselben Bezugszeichen versehen.

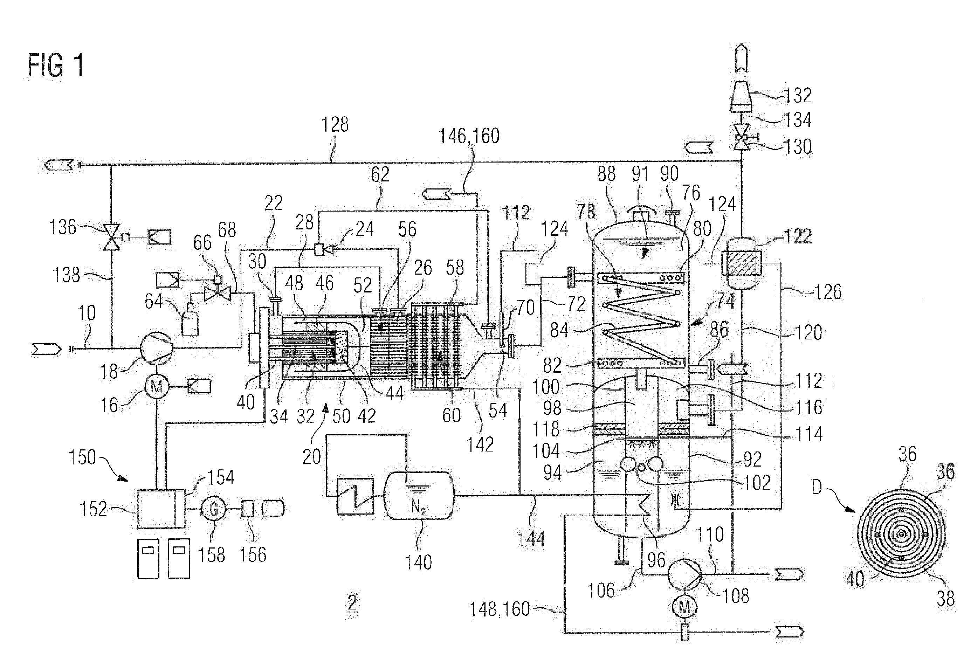

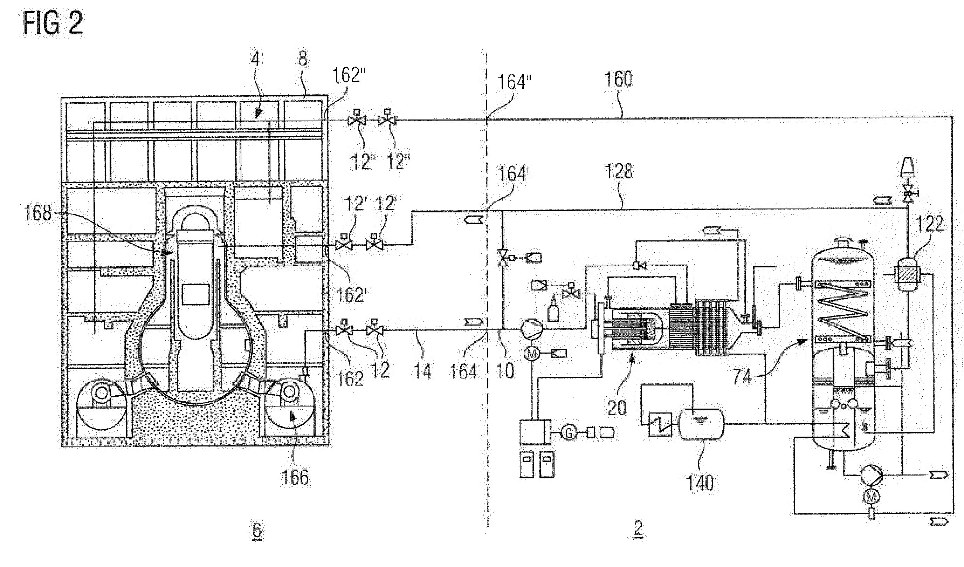

Das in FIG. 1 und FIG. 2 in einer schematischen Übersicht dargestellte Containment-Schutzsystem 2 (kurz: Schutzsystem) dient zur Behandlung der im Containment 4 einer kerntechnischen Anlage 6, insbesondere eines Kernkraftwerks, befindlichen Atmosphäre, vor allem bei kritischen Störfällen (engl. Severe Accident) und Unfällen mit massiver Freisetzung von Wasserstoff H₂ und/oder Dampf. Aufgabe des Schutzsystems 2 ist es unter anderem, bei derartigen Unfallszenarien auftretende Überdruckzustände in dem als Containment 4 bezeichneten Innenraum einer Sicherheitshülle 8 oder eines Sicherheitsbehälters abzubauen und zündfähige Ansammlungen von Wasserstoff H₂ durch Rekombination mit Sauerstoff O₂ abzubauen und/oder gegebenenfalls durch Inertisierung unkritisch zu machen.

Zu diesem Zweck umfasst das mit seinen wesentlichen Komponenten außerhalb der Sicherheitshülle 8 befindliche Schutzsystem 2 gemäß FIG. 1 eine Zuleitung 10, die an eine zugehörige, aus der Sicherheitshülle 8 der kerntechnischen Anlage 6 herausgeführte und mit einer Absperrarmatur 12 verschließbare Ausströmleitung 14, die auch als Druckentlastungsleitung bezeichnet wird, angeschlossen ist (siehe auch FIG. 2).

In die Zuleitung 10 ist ein beispielsweise mit Hilfe eines elektrischen Antriebsmotors 16 betriebenes Fördergebläse 18 geschaltet. Wie weiter unten näher ausgeführt ist, kann das Fördergebläse 18 auch weiter stromabwärts in dem den Fluidstrom führenden Leitungssystem angeordnet sein. Das Fördergebläse 18 fördert das im Containment 4 vorhandene Gas-Dampf-Gemisch, das zu Beginn des Entlastungsvorgangs einen Druck von beispielsweise > 1 Bar bis 10 Bar besitzen kann, zu einer stromabwärts angeordneten Rekombinationsvorrichtung 20, die für einen katalytisch unterstützten und flammenlosen Abbau von darin enthaltenem Wasserstoff H₂ ausgelegt ist. Hier in FIG. 1 ist die Rekombinationsvorrichtung 20 als kombinierte Mehrstufen-Rekombinations- und Kühlvorrichtung ausgestaltet. Das im Entlastungsbetrieb aus dem Containment 4 durch die Ausströmleitung 14 und die Zuleitung 10 strömende Gas-Dampf-Gemisch wird nachfolgend auch als Fluidstrom, oder in Anlehnung an sogenannte Ventingsysteme auch als Ventstrom bezeichnet, obgleich beim dem Schutzsystem 2 gemäß FIG.1 nicht unbedingt ein Venting im eigentlichen Sinne - mit Freisetzung in die Umgebung - erfolgen muss.

Zunächst durchläuft der über den Leitungsabschnitt 22 zugeführte, zu behandelnde Fluidstrom eine Venturidüse 24 oder ähnliche Düse vom konvergent-divergenten Typ und wird dabei auf Strömungsgeschwindigkeiten von bis zu 160 m/s, gemessen an der Kehlstelle der Venturidüse 24, beschleunigt.

Anschließend, sprich stromabwärts, durchläuft der Fluidstrom einen rekuperativen Vorwärmer 26, in dem er durch Wärmeübergang von dem infolge der stromabwärtigen katalytischen Reaktion erhitzten Fluidstrom (Abgasstrom) vorgewärmt wird. Der Vorwärmer 26 ist im vorliegenden Fall als U-förmige Rohrleitung mir nur geringen Strömungsverlusten für den Fluidstrom ausgeführt.

Der vorgewärmte Fluidstrom tritt dann über die Leitung 28 und den Eintrittsstutzen 30 in die Reaktionskammer 32 der als Oxidationsvorrichtung wirksamen Rekombinationsvorrichtung 20 ein und durchläuft eine auch als elektrothermischer Rekombinator bezeichnete erste Reaktionszone 34, die elektrisch beheizt wird, und in der eine flammenlose Rekombination von im Fluidstrom enthaltenen Wasserstoff H₂ und Sauerstoff O₂ zur Wasserdampf H₂O erfolgt. Die elektrisch eingeleitete Reaktion überträgt sich in einem Dominoeffekt auf die umgebenden konzentrisch angeordneten Reaktionszonen (siehe weiter unten).

Durch die bei der H₂-Rekombination entstehende Reaktionswärme kann die elektrische Heizleistung nach dem Anfahrbetrieb allmählich zurückgefahren werden, ohne dass die in Gang gebrachte Reaktion unterbrochen wird. Je höher die H₂-Konzentration ist, desto größer kann der Durchsatz durch entsprechende Leistungsregelung des Fördergebläses 18 eingestellt werden (sogenannter Gleitdurchsatzbetrieb).

Der Strömungsweg innerhalb dieser Prozesskomponente wird durch eine Mehrzahl von konzentrisch um eine gemeinsame Längsachse angeordneten, jeweils an ihrer inneren und äußeren Oberfläche mit einer im Hinblick auf die Wasserstoff-Rekombination katalytisch wirksamen Beschichtung versehenen, zylindermantelförmigen Trägerelementen 36 definiert, wie aus dem in Querschnittsdarstellung herausgegriffenen Detail D hervorgeht. Die Trägerelemente 36 sind typischerweise aus Metall oder aus Keramik oder aus einem metallische und/oder keramischen Bestandteile enthaltenden Composite-Material gefertigt. Die katalytische aktive Beschichtung der Trägerelemente 36 enthält in der Regel Platin, Palladium, Vanadium und/oder andere geeignete Edelmetalle.

Zumindest in einem der auf diese Weise gebildeten strömungsführenden Zwischenräume 38, alternativ oder zusätzlich in den Trägerelementen 36, sind parallel zur Längsachse ausgerichtete, stabförmige elektrische Heizelemente 40 angeordnet, und zwar vorzugsweise gleichmäßig über den Umfang verteilt. Auch im zentralen Zwischenraum kann ein derartiges elektrisches Heizelement 40 bzw. Heizstab angeordnet sein. Insgesamt wird damit eine möglichst gleichmäßige Beheizung des durch die Trägerelemente 36 unterteilten Strömungskanals der ersten Reaktionszone 34 über die Längsausdehnung hinweg und auch über den gesamten Querschnitt hinweg erreicht, um so die katalytische Reaktion auch bei vergleichsweise hoher Strömungsgeschwindigkeit und dementsprechend geringer Verweildauer des Fluidstroms in der ersten Reaktionszone 34 zu initiieren und zu unterstützen.

Unmittelbar im Anschluss an die erste Reaktionszone 34, sprich strömungsmäßig nachgeschaltet, erstreckt sich eine zweite vom Fluidstrom durchströmte Reaktionszone 42, die nach Art eines aus der Abgastechnik bekannten Schüttgut- bzw. Schüttbett-Katalysators ausgebildet ist und zur katalytischen Rekombination von durch die erste Reaktionsstufe 34 noch nicht erfassten Wasserstoff- und Sauerstoffanteilen beiträgt.

Der aus der zweiten Reaktionszone 42 austretende Fluidstrom wird an der in diesem Abschnitt kuppelartig geformten Umfassungswand 44 der Reaktionskammer 32 zur Richtungsumkehr gezwungen und durchläuft schließlich eine dritte, im Querschnitt ringförmige Reaktionszone 46, die nach innen durch den Strömungskanal der ersten Reaktionszone 34 und nach außen durch die in diesem Abschnitt zylindermantelförmige Umfassungswand 44 der Reaktionskammer 32 begrenzt ist.

Die dritte Reaktionszone 46 dient zur katalytischen Nachbehandlung des durch die beiden ersten Reaktionszonen 34 und 42 vorbehandelten Fluidstroms im Hinblick auf noch zu rekombinierende Restbestanteile nach dem an sich bekannten Prinzip passiver autokatalytischer Rekombinatoren mit druckverlustarmen Trägerelementen (sogenannte PARs). Durch die mantelartige Ausgestaltung der dritten Reaktionszone 46 um die erste Reaktionszone 34 herum erfolgt ein Wärmeübertrag von innen nach außen, so dass auch die dritte Reaktionszone 46 indirekt durch die in der ersten Reaktionszone 34 angeordneten Heizelemente 40 sowie durch die dort infolge der exothermen Oxidationsreaktion freigesetzte Wärme beheizt wird.

Nach einer erneuten Richtungsumkehr am linken stirnseitigen Ende der Reaktionskammer 32 strömt der in den drei aufeinanderfolgenden Reaktionszonen 34, 42 und 46 behandelte und hinsichtlich der Wasserstoffkonzentration abgereicherte Fluidstrom zunächst durch den im Querschnitt ringförmigen Bereich 48 zwischen der Umfassungswand 44 der Reaktionskammer und der zylindermantelförmigen Umfassungswand 50 des sie umgebenden äußeren Strömungskanals 52 nach rechts hin zu dessen Austrittsstutzen 54.

Dabei strömt das infolge der mehrstufigen Rekombinationsreaktionen und durch die Wirkung der elektrischen Heizelemente 40 erwärmte, aus der Reaktionskammer 32 abströmende Gas-Dampf-Gemisch an den Wärmetauscherflächen des als Wärmetauscher 56 wirksamen Vorwärmers 26 vorbei, wo es einen Teil seines Wärmegehalts in der bereits oben beschriebenen Weise auf das in die Reaktionskammer 32 einströmende Gas-Dampf-Gemisch abgibt.

Weiter stromabwärts im Strömungskanal 52 strömt das hinsichtlich seiner Wasserstoff-Konzentration abgereicherte Gas-Dampf-Gemisch (Abgas) an den von einem Kühlmittel, hier Stickstoff N₂ (siehe weiter unten), durchströmten Wärmetauscherflächen eines Wärmetauschers 58 in der Kühlzone 60 vorbei und überträgt dabei einen weiteren Teil seines verbliebenen Wärmegehalts auf das Kühlmittel. Für eine besonders wirksame Kühlung ist das Kühlmittel bei seinem Eintritt in den Wärmetauscher 58 zumindest teilweise flüssig und wird durch den Wärmeübertrag von dem im Strömungskanal 52 strömenden Gas-Dampf-Gemisch zumindest teilweise verdampft. Eine nennenswerte Kondensation von im Gas-Dampf-Gemisch enthaltenen Dampfbestanteilen, insbesondere von Wasserdampf als Produkt der Rekombinationsreaktion, findet dabei aufgrund der gegebenen Temperaturverhältnisse und der Systemauslegung noch nicht statt. Die Kühlzone 60 wirkt also lediglich als Gaskühler und nicht als Kondensator. Typische Temperaturwerte des Strömungsmediums liegen unmittelbar vor der Kühlzone 60 im Bereich von 600 bis 800 °C und danach im Bereich von 250 bis 500 °C.

Ausgangseitig, hier stromabwärts der Kühlzone 60, ist an den Strömungskanal 52 eine Rezirkulationsleitung 62 angeschlossen, deren anderes Ende in den zum Vorwärmer 26 führenden Leitungsabschnitt 22 mündet, um so eine Teilmenge des aus der Rekombinationsvorrichtung 20 abströmenden, abgereicherten Fluidstroms zur deren Eingangsseite zurückzuführen und mit dem vom Containment 4 kommenden, angereicherten Fluidstrom zu vermischen. Genauer gesagt mündet das andere Ende der Rezirkulationsleitung 62 in einer an der Kehlstelle der Venturidüse 24 angeordneten Einspeiseöffnung, so dass der zurückgeführte Teilstrom infolge der sich dort einstellenden Saugwirkung vom Hauptstrom mitgerissen wird (Ejektor-Prinzip, siehe weiter unten). Durch die integrierte Abgasrückführung und die damit verbundene partielle Inertisierung der Reaktionsstufen bzw. Reaktionszonen 34, 42 und 46 können auch hohe Wasserstoffkonzentrationen (bis zu 30 Vol.-% oder mehr) im aus dem Containment 4 geführten Fluidstrom zum schnellen Wasserstoffabbau umgesetzt werden.

Zur Einstellung bzw. Regelung des zurückgeführten Teilstroms kann in der Rezirkulationsleitung 62 und/oder in der Einspeiseöffnung der Venturidüse 24 ein entsprechendes Regelventil (nicht dargestellt) vorhanden sein. Dabei wird typischerweise als Regelziel das Einhalten von > 50 % Dampfanteil im Eintrittsstrom der Rekombinationsvorrichtung 20 angestrebt.

Bei inertisierten Containments 4 erfolgt eine geregelte Zuspeisung von Sauerstoff O₂ vor der Rekombinationsvorrichtung 20 aus einem geeigneten Reservoir, hier aus einem auch Sauerstoffflasche 64 bezeichneten, mit unter Druck stehenden Sauerstoff O₂ gefüllten Druckgefäß. Zur Einstellung bzw. Regelung der Zuspeiserate ist ein Regelventil 66 in der Verbindungsleitung 68 vorgesehen, welche hier direkt in die Reaktionskammer 32 mündet. Durch Messung der H₂/O₂ Konzentration im Eintrittsstrom der Rekombinationsvorrichtung 20 wird die erforderliche Sauerstoffmenge für eine stöchiometrische Verbrennung ermittelt und die zuzuspeisende Sauerstoffmenge über das Regelventil 66 eingestellt.

Stromabwärts des Anschlusses für die Rezirkulationsleitung 62, an dem der Reaktionskammer 32 entgegengesetzten Ende des Strömungskanals 52 ist eine Einsprühvorrichtung 70 zum Einsprühen bzw. Eindüsen einer Flüssigkeit, hier im Wesentlichen Wasser, welches als Kondensat in den nachgeschalteten Prozessstufen anfällt (siehe weiter unten), angeordnet. Auf diese Weise ist eine weitere Kühlung des im Strömungskanal 52 geführten Fluidstroms nach Art einer Einspritzkühlung verwirklicht. Der Sprühstrom wird der Einfachheit halber vorzugsweise fest eingestellt.

Zwar ist die hier beschriebene Ausgestaltung der Rekombinationsvorrichtung 20 als kombinierte Mehrstufen-Rekombinations- und Kühlvorrichtung für den vorgesehenen Zweck besonders vorteilhaft, jedoch können prinzipiell auch andere, insbesondere einfacher aufgebaute Rekombinationsvorrichtungen, etwa vom einstufigen Typ und/oder mit niedrigeren Auslegungs-Strömungsgeschwindigkeiten, zum Einsatz kommen. Die in den Strömungskanal 52 integrierten Kühlstufen können ggf. entfallen oder auf andere Weise verwirklicht sein. Die vorgeschalte Venturidüse kann in anderen Ausgestaltungen entfallen, ebenso die Abgasrückführung über die Rezirkulationsleitung 62.

Der an der rechten Stirnseite des Strömungskanals 52 austretende, abgereicherte und gekühlte Fluidstrom tritt über die Leitung 72 in eine Kondensationsvorrichtung 74 ein, die hier vorteilhafterweise als kombinierte Kondensations- und Wäschervorrichtung ausgebildet ist. Der eigentlichen Kondensationsstufe, in der der Phasenübergang der kondensierbaren Anteile des Fluidstroms von gasförmig nach flüssig erfolgt, ist zweckmäßigerweise eine (Vor-) Kühlstufe vorgeschaltet, die bevorzugt ebenfalls baulich in die Gesamteinheit integriert ist.

Im oberen Teil der insgesamt im Wesentlichen aufrecht stehenden zylindrischen Anordnung befindet sich ein von Kühlflüssigkeit 76, hier Wasser H₂O, umgebener Ringkühler 78 zur Kühlung des Fluidstroms auf annähernd Kondensationstemperatur in Bezug auf darin enthaltene Dampfanteile, insbesondere von bei der vorherigen Rekombinationsreaktion freigesetztem Wasserdampf, aber auch von bereits zuvor im Containment 4 freigesetztem Dampf. Der Ringkühler 78 weist einen Eintrittssammler 80 und einen Austrittssammler 82 auf, die über dazwischen liegende, strömungsmäßig parallel geschaltete und als Wärmetauscher wirksame Spiralrohre 84 miteinander verbunden sind. Das zur Kühlung dienende Wasser H₂O wird beispielsweise dem örtlichen Wassernetz (Feuerwehranschluss etc.) entnommen und bedarfsweise über einen Frischwasseranschluss 86 in den den Ringkühler 78 umgebenden Kühlflüssigkeitsbehälter 88 zugespeist. Beim Kühlvorgang erwärmtes und verdampftes Wasser wird als Wasserdampf über einen Dampfauslass 90 in die Umgebung entlassen. Die auf diese Weise insgesamt gebildete Kühlvorrichtung 91 wird auch kurz als Kühler oder (Vor-) Kühlstufe bezeichnet. Die Temperatur des Fluidstroms liegt unmittelbar vor dem Kühler typischerweise im Bereich von 200 bis 500 °C und danach im Bereich von 100 bis 200 °C, abhängig vom Druck im System.

Der auf diese Weise weiter abgekühlte Fluidstrom tritt über den Austrittsammler 82 in den unterhalb des Kühlflüssigkeitsbehälters 88 angeordneten Kondensationsbehälter 92 über, in dem infolge weiterer Kühlung die Kondensation der Dampfanteile erfolgt. Das flüssige Kondensat 94 sammelt sich am Boden des Kondensationsbehälters 92. Die zur Kondensation erforderliche Rückkühlung erfolgt zumindest teilweise über ein gesondertes Kühlmittel, hier Stickstoff N₂, welches durch in das Kondensat 94 hineinragende, als Wärmetauscher 96 wirksame Rohrbündel oder dergleichen geführt wird (siehe weiter unten). Für eine besonders wirksame Kühlung ist das Kühlmittel bei seinem Eintritt in den Wärmetauscher 96 zumindest teilweise flüssig und wird durch den Wärmeübertrag von dem Kondensat 94 verdampft. Der Wärmetauscher 96 kann also, ebenso wie der Wärmetauscher 58, bei Verwendung von Stickstoff als Stickstoff-Verdampfer bezeichnet werden.

Zusätzlich oder alternativ zu der durch Stickstoff-Verdampfung (allgemein: Inertgas-Verdampfung) bewirkten Rückkühlung des Kondensationsbehälters 92 kann auch eine Rückkühlung durch Kühlwasser-Verdampfung vorgesehen sein, etwa mit Hilfe von im/am Kondensationsbehälter 92 angebrachten, von Kühlwasser durchströmten Wärmetauschern und/oder durch die unmittelbar räumlich benachbarte, als Wärmesenke wirksame Kühlvorrichtung 91. Generell ist die Systemauslegung bevorzugt derart, dass die Kühlung des Fluidstroms primär durch Kühlwasser-Verdampfung und sekundär durch Stickstoff-Verdampfung erfolgt, unter anderem, um den Stickstoff-Verbrauch und damit den notwendigen Vorrat in vertretbaren Grenzen zu halten.

Bei der in FIG. 1 dargestellten Variante erfolgt beim Eintritt des hinsichtlich seiner Dampfbestandteile zu kondensierenden Fluidstroms in den Kondensationsbehälter 92 zugleich eine Reinigung der nicht-kondensierbaren Gasanteile. Dazu ist der Eintrittsbereich 98 nach Art eines Venturiwäschers ausgestaltet. Der Fluidstrom wird innerhalb eines zentral angeordneten zylindrischen Strömungskanals 100 ähnlich wie bei einer Venturikehle über eine beispielsweise als Ringschlitz oder als blendenartige Öffnung ausgestaltete Engstelle 102 geführt und tritt weiter unten in das sich ausbildende Kondensat 94 ein. Im Bereich der Engstelle 102 oder in Strömungsrichtung gesehen kurz davor kann eine Einsprühvorrichtung 104 für eine Flüssigkeit angeordnet sein. Zweckmäßigerweise wird hierzu das sich im Kondensationsbehälter 92 sammelnde Kondensat 94 selber verwendet. Der Sprühstrom wird der Einfachheit halber vorzugsweise fest eingestellt. Durch die intensive Verwirbelung und Fragmentierung des Fluidstroms im Bereich der Engstelle 102 und durch die Vermischung mit Sprühflüssigkeit sowie durch die Tatsache, dass die nicht-kondensierbaren Gasbestandteile durch das sich sammelnde Kondensat 94 hindurchgeführt werden, werden die im Fluidstrom enthaltenen Radionuklide sowie Jod in das Kondensat 94 abgeschieden.

Das sich Laufe des Entlastungsbetriebs im Kondensationsbehälter 92 ansammelnde, radioaktiv belastete Kondensat 94 wird bedarfsweise diskontinuierlich oder kontinuierlich über eine an den Boden des Kondensationsbehälters 92 angeschlossene Kondensatentnahmeleitung 106, in die eine Kondensatpumpe 108 geschaltet ist, abgezogen. Eine auf die Kondensatpumpe 108 einwirkende Füllstandsregelung sorgt dafür, dass die Pegelhöhe des Kondensats 94 im Kondensationsbehälter 92 einen vorgegebenen Maximalwert nicht überschreitet. Indem das überschüssige Kondensat 94 zum größten Teil oder vollständig über eine Kondensatrückführleitung 110 zurück in das Containment 4 der kerntechnischen Anlage 6 gepumpt wird, werden auch die darin enthaltenen Aktivitäten gezielt einer sicheren Verwahrung zugeführt. Mit anderen Worten: Die Aktivität wird gezielt in der Reinigungsstufe zurückgehalten, um sie von hier gezielt wieder in das Containment 4 zurückfördern zu können. Durch das Einsprühen des Kondensats in das Containment 4 wird dort auch eine Kühlwirkung erzeugt, die sich wiederum vorteilhaft auf den Druck auswirkt, also zu einer Druckabsenkung führt.

Von der Kondensatrückführleitung 110 zweigen eine Leitung 112 und eine Leitung 114 ab, über die bedarfsweise ein erster Teilstrom des Kondensats zur Einsprühvorrichtung 70 und/oder einer zweiter Teilstrom zur Einsprühvorrichtung 104 geleitet werden können. Zur bedarfsgerechten Einstellung der Kondensatströme können entsprechende Regelventile in den Leitungen vorhanden sein.

Die nicht-kondensierbaren Gasanteile treten aus dem Kondensat 94 in den darüber liegenden Gassammelraum 116 des Kondensationsbehälters 92 ein, wobei sie im Strömungsweg angeordnete Filterelemente 118 passieren. Die Filterelemente 118 dienen in einer ersten Stufe als Tropfenabscheider und in einer zweiten Stufe oder Schicht zur Abscheidung von Feinaerosolen. Die Abscheidung ist insbesondere von Bedeutung, wenn ein Ventstrom in die Umgebung abgegeben wird (siehe weiter unten).

Über die an den Gassammelraum 116 angeschlossene Leitung 120 wird das abgekühlte und vorgereinigte Gas einer weiteren Filtereinrichtung in Gestalt eines sogenannten Molekularsiebes 122 zugeführt, welches auch in den Kondensationsbehälter 92 bzw. allgemein in die Kondensations- und Wäschervorrichtung baulich integriert sein kann. Das beispielsweise auf der Basis von Zeolith-Filtern aufgebaute und nach dem Prinzip der Chemiesorption arbeitende Molekularsieb 122 bewirkt vor allem eine Zurückhaltung organischer Jodverbindungen (so genanntes Organojod), auch bei vergleichsweise kleinen Partikelgrößen.

Für einen ordnungsgemäßen und effizienten Betrieb ohne die Gefahr einer Zerstörung der feuchtigkeitsempfindlichen filterwirksamen Bestandteile wird das Molekularsieb 122 beheizt, und zwar vorzugsweise auf rekuperative Weise. Zu diesem Zweck zweigt von der Leitung 72 eine Leitung 124 zur Entnahme des dort noch relativ heißen Fluidstroms ab, der an dem Molekularsieb 122 zur Wärmeübertragung vorbeigeführt wird. Der Entnahmestrom wird weiter stromabwärts über die Leitung 126 in das im Kondensationsbehälter 92 vorhandene Kondensat 94 geleitet.

Der aus dem Molekularsieb 122 abströmende, gereinigte und gefilterte Gasstrom wird im Regelfall vollständig über die Rückführungsleitung 128 in das Containment 4 zurückgeführt. Es erfolgt in diesem Kreislaufbetrieb also keinerlei Emission in die Umgebung (engl. Zero Release / Zero Emission).

Lediglich für Notfälle zweigt von der Rückführungsleitung 128 eine mit einer Absperrarmatur 130 versehene, beispielsweise in einem Kamin 132 mündende Ausströmleitung 134, über die der zuvor gereinigte und gefilterte Gasstrom im Sinne eines herkömmlichen Ventings in die Umgebung entlassen werden kann. Es kann somit jederzeit auch eine gefilterte schnelle Druckentlastung auf ein niedrigeres Druckniveau im Containment 4 mit Emission in die Umgebung durchgeführt werden und anschließend Kreislaufbetrieb (Zero Release) zur Minimierung der radioaktiven Abgabe an die Umgebung gefahren werden.

Über eine normalerweise durch eine Absperrarmatur 136 verschlossene Verbindungsleitung 138 zwischen der Zuleitung 10 und der Rückführungsleitung128 kann bedarfsweise eine Teilmenge gereinigten und gefilterten, wasserstoffarmen Gases direkt und ohne Umweg über das Containment 4 in den zu behandelnden wasserstoffreichen Fluidstrom überführt werden. Hierdurch wird der Eintrittsstrom in das Fördergebläse 18 inertisiert.

Zur Rückkühlung der Kondensations- und Wäschervorrichtung 74, insbesondere des Kondensationsbehälters 92 und ggf. auch zur vorherigen Kühlung des Fluidstroms in der Kühlzone 60 ist ein thermisch gegenüber der Umgebung isolierter Vorratsbehälter 140 mit flüssigem Stickstoff N₂ als Kühlmittel vorgesehen (Volumen typischerweise 10.000 bis 20.000 m³), der über entsprechende Leitungen 142 und 144 mit den zugehörigen Wärmetauschern 58 und 96 verbunden ist, in denen wie bereits oben dargestellt der Stickstoff N₂ durch Wärmeaufnahme verdampft. In der hier dargestellten Ausführungsvariante wird der verdampfte Stickstoff über Leitungen 146 und 148 in das Containment 4 oder in das Reaktorgebäude geführt. Dadurch wird eine Inertisierung der Atmosphäre im Inneren bewirkt, um zu verhindern, dass eine Leckage von Wasserstoff H₂, die nicht bzw. nicht schnell genug durch gebäudeinterne Rekombinatoren bewältigt wird, dort zu einer unkontrollierten Zündung führt.

Falls nicht der gesamte Stickstoff N₂ in das Containment 4 oder Reaktorgebäude eingeleitet werden soll, kann der überschüssige Anteil über eine hier nicht dargestellte Auslassöffnung in den Leitungen 146 und 148 in die Umgebung abgelassen werden.

Flüssiger Stickstoff ist vergleichsweise kostengünstig verfügbar und daher als Kühl- und/oder Inertisierungsmittel bevorzugt. Alternativ oder zusätzlich kann aber auch flüssiges Kohlendioxid (CO₂) für diesen Zweck verwendet werden. Überall im Text, wo von Stickstoff die Rede ist, könnte also auch Kohlendioxid oder Stickstoff / Kohlendioxid oder allgemeiner Inertgas stehen, sofern dieses einer effektiven Kühlung und/oder Verflüssigung sowie einer kompakten Lagerung in diesem Zustand zugänglich ist.

Das Containment-Schutzsystem 2 ist mit einer autarken unterbrechungslosen Stromversorgungseinheit 150, vorzugsweise mit einer wieder aufladbaren Batterie 152 bzw. einem Akkumulator zum sicheren Start und unmittelbaren verzögerungsfreien Betrieb auch in schweren Störfall-Szenarien inklusive Station-Blackout und LOOP (= Loss Of Offsite Power) ausgestattet. Die Stromquelle versorgt insbesondere über elektrische Leitungen den Antriebsmotor 16 des Fördergebläses 18 und die elektrischen Heizelemente 40 der Rekombinationsvorrichtung 20 mit elektrischem Strom. In einer möglichen Variante versorgt sie auch die Kondensatpumpe 108 mit elektrischem Strom. Die langfristige Systemverfügbarkeit wird durch eine Ladeeinheit 154 für die wiederaufladbare Batterie 152, vorzugsweise mit einem durch einen Verbrennungsmotor 156 (z. B. Dieselmotor) angetriebenen Generator 158, sichergestellt.

Das Containment-Schutzsystem 2 ist bevorzugt in modularer Bauweise verwirklicht. Die einzelnen Systemeinheiten bzw. Module sind dazu in Containerabmessungen transporttauglich für Straße und Flugzeug ausgeführt. Das System ist daher für eine feste Installation in Containerbauweise oder mobil einsetzbar. Beispielsweise bildet die Kondensations- und Wäschervorrichtung 74 inklusive Molekularsieb 122 ein derartiges Modul, ebenso die Mehrstufen-Rekombinations- und Kühlvorrichtung 20. Die Stromversorgungseinheit 150 kann zusammen mit einer Steuer- bzw. Regelvorrichtung für die gesamte Anlage in einem weiteren Modul untergebracht sein. Der Vorratsbehälter 140 für den Flüssigstickstoff N₂ schließlich bildet ein weiteres Modul, das nach Verbrauch des Vorrats gegen ein gleichartiges, betriebsbereit aufgefülltes Modul austauschbar ist. Die einzelnen Module sind zweckmäßigerweise hinsichtlich ihrer Leitungsanschlüsse und Schnittstellen etc. aufeinander abgestimmt, so dass die erforderlichen Verbindungen leicht und ohne Verwechslungsgefahr hergestellt werden können.

Die kerntechnische Anlage 6 selber ist im Vorfeld lediglich mit geeigneten Anschlüssen auszustatten, an die nach dem Aufbau der außerhalb des Containments 4 angeordneten Module die Zuleitung 10 für den Druckentlastungs-Fluidstrom, die Rückführungsleitung 128 für für den gereinigten Gasstrom und die Einspeiseleitung 160 für den zur Inertisierung vorgesehenen Stickstoff N₂ angeschlossen werden können. Diese Voraussetzung ist selbst bei Altanlagen vergleichsweise einfach zu realisieren bzw. nachzurüsten.

Dies ist schematisch in FIG. 2 dargestellt. Der Teil links der vertikalen gestrichelten Linie repräsentiert ein Kernkraftwerk als Beispiel für eine kerntechnische Anlage 6 mit einer mantelartigen Sicherheitshülle 8 aus hochfestem, dickwandigem Stahl, der den auch als Containment 4 bezeichneten Innenraum hermetisch gegenüber der äußeren Umgebung abschirmt. Die Sicherheitshülle 8 ist mit einer Anzahl von fest installierten Durchführungen 162, 162' und 162" für die verschiedenen strömungsführende Leitungen ausgestattet, die auf der Außenseite mit Absperrarmaturen 12, 12' und 12" versehen sind (jeweils zweifach, in Reihe geschaltet). Noch weiter außerhalb, hier durch die gestrichelte vertikale Linie repräsentiert, weisen die durch die Sicherheitshülle 8 aus dem Containment 4 geführten Leitungen Anschlussstutzen 164, 164' und 164" für die zugehörigen Leitungen des rechts der gestrichelten Linie bedarfsweise errichteten Containment-Schutzsystems 2 auf, so dass nach der Errichtung und der Verbindung einander zugeordneter Leitungsabschnitte insgesamt die oben genannten Leitungen - Zuleitung 10, Rückführungsleitung 128 und Inertgas-Einspeiseleitung 160 - realisiert sind.

Wie man anhand der FIG. 2 ferner für den beispielhaft dargestellten Siedewasserreaktor erkennt, erfolgt in diesem Fall die Entnahme des Ventstroms bevorzugt im Bereich der ringförmigen Kondensationskammer 166, die Rückführung des gereinigten Gasstroms im Bereich um den Reaktordruckbehälter 168 herum und die Einspeisung von Stickstoff in weiter außenliegend angeordneten Teilräumen.

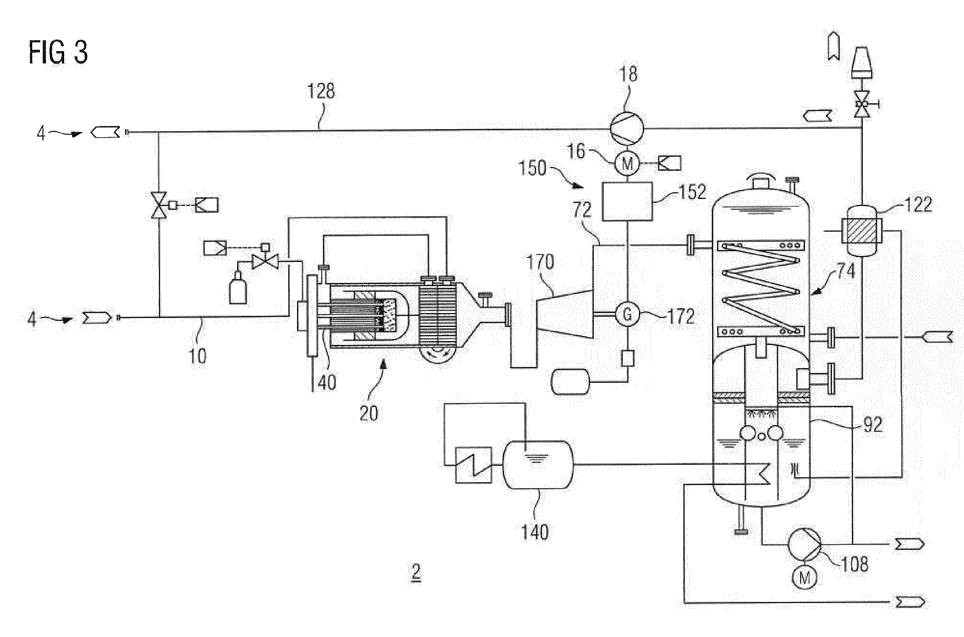

Die in FIG. 3 dargestellte Variante des Schutzsystems 2 ist hinsichtlich ihrer wesentlichen Komponenten ähnlich wie die in FIG. 1 dargestellte Variante aufgebaut, so dass an dieser Stelle nur noch auf die Unterschiede eingegangen werden muss.

Zunächst sind einige optionale Ausstattungsmerkmale weggelassen worden, wie etwa die Abgasrückführung, die Stickstoffkühlung und die Kondensateinsprühung in der Rekombinationsvorrichtung 20. Diese können selbstverständlich weiterhin einzeln oder alle zusammen vorhanden sein.

Eine wesentliche Abwandlung gegenüber der zuvor diskutierten Variante besteht darin, dass das Fördergebläse 18 nicht in der Zuleitung 10 für den wasserstoffreichen Fluidstrom aus dem Containment 4, also stromaufwärts zur Rekombinationsvorrichtung 20 angeordnet ist, sondern in der Rückführungsleitung 128 für den wasserstoffarmen, gereinigten Gasstrom stromabwärts zum Kondensationsbehälter 92 und zum Molekularsieb 122. Dies hat den Vorteil, dass der anfänglich im Fluidstrom mitgeführte Wasserstoff H₂ bereits in der Rekombinationsvorrichtung 20 abgebaut wurde und der dabei entstandene Wasserdampf zusammen mit anderen Dampfanteilen in der Kondensationsvorrichtung 74 kondensiert und separiert wurde, wenn der verbleibende Gasstrom in das Fördergebläse 18 tritt. Für den Transport des Fluidstroms bis zum Fördergebläse 18 reicht das in der Kondensationsvorrichtung 74 durch die Dampfkondensation passiv erzeugte Druckgefälle aus. Das Fördergebläse 18 dient dann vor allem dazu, die verbleibenden nicht kondensierbaren Gase wieder in das Containment 4 zurück zu fördern. Dies wirkt sich günstig auf die Dimensionierung der Gebläseleistung und die Strom- / Energieaufnahme aus. Diese Variante könnte auch für sich genommen bei dem Schutzsystem 2 gemäß FIG. 1 implementiert sein.

Eine weitere, damit kombinierte Abwandlung, die aber auch für sich genommen in dem Schutzsystem 2 gemäß FIG. 1 implementiert sein könnte, besteht bei dem Schutzsystem 2 gemäß FIG. 3 darin, dass in die Leitung 72 zwischen der Rekombinationsvorrichtung 20 und der Kondensations- und Wäschervorrichtung 74 eine vom sich entspannenden Fluidstrom angetriebene Dampfturbine 170 geschaltet ist, die einen Generator 172 antreibt.

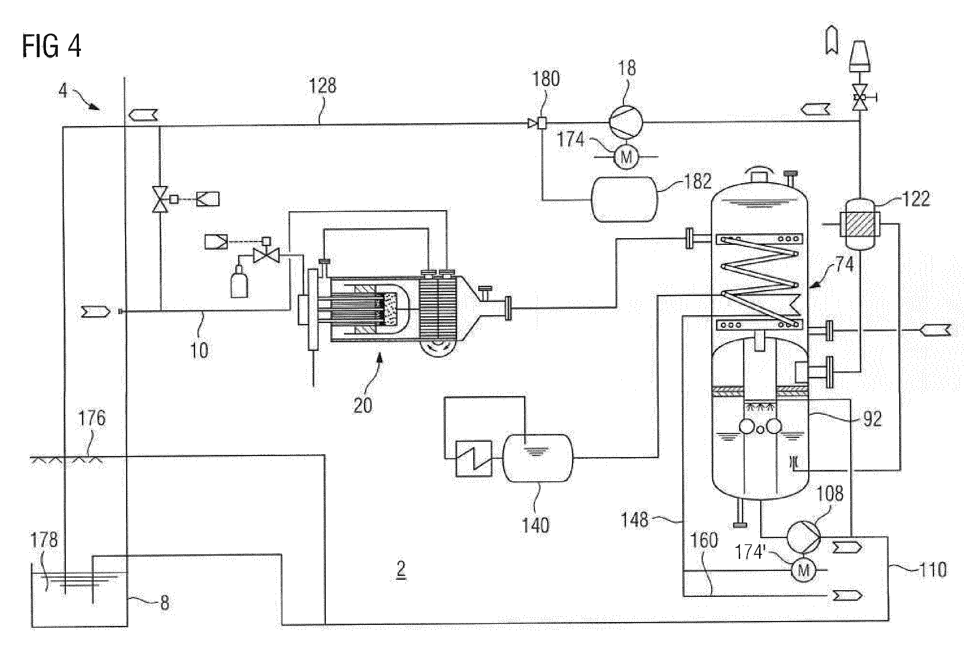

Die an den Klemmen des Generators 172 abgegriffene elektrische Spannung wird nach Gleichrichtung dazu genutzt, die Batterie 152 der Stromversorgungseinheit 150 aufzuladen, welche wiederum den Antriebsmotor 16 des Fördergebläses 18 und die Heizelemente 40 der Rekombinationsvorrichtung 20 mit Strom versorgt. Somit wird das Enthalpiegefälle des durch die Wasserstoff-Rekombination überhitzten Dampfes genutzt, um über den Zwischenschritt der Konvertierung in elektrische Energie und Zwischenspeicherung die nicht-kondensierbaren Gase aus der Kondensations- und Wäschervorrichtung 74 in das Containment 4 zurück zu fördern. Die wiederaufladbare Batterie 152 muss also lediglich zum Starten des Prozesses extern aufgeladen worden sein und wird dann im Entlastungsbetrieb autark nachgeladen. Das gesamte System ist damit für eine weitgehend passive Betriebsweise ohne den Einsatz externer elektrischer Hilfsenergie ausgelegt. Weitere Variationen des Schutzsystems, die mit den bislang beschriebenen Varianten auf vielfältige Art kombiniert werden können, sind in FIG. 4 dargestellt.

Eine Besonderheit des hier dargestellten Schutzsystems 2 besteht darin, dass die Entspannungsenthalpie des in der Kondensations- und Wäschervorrichtung 74 bzw. in der Kühlstufe 60 passiv verdampften Stickstoffs N₂ zum Antrieb eines Gasmotors 174 vom Typ Expansions-Gasmotor genutzt wird. Der Gasmotor 174 treibt dann vorzugsweise direkt, also ohne den Umweg der Konvertierung in elektrische Energie das in der Rückführungsleitung 128 angeordnete Fördergebläse 18 an, mit dem die nicht-kondensierbaren Gase in das Containment 4 zurückgespeist werden.

Zusätzlich oder alternativ kann die Kondensatpumpe 108 auf die beschriebene Weise durch denselben oder einen weiteren Expansions-Gasmotor 174' angetrieben werden. Alternativ kann in allen Varianten bei entsprechend gewählter Aufstellungshöhe eine Rückspeisung des sich im Kondensationsbehälter 92 ansammelnden Kondensats 94 in das Containment 4 durch geodätisches Gefälle vorgesehen sein.

Generell kann bei Einsatz einer Kondensatpumpe 108 das Kondensat 94 im Containment 4 mit Hilfe einer Sprühvorrichtung 176 versprüht werden, um so eine Kühlung der Containmentatmosphäre zu bewirken.

Weiterhin kann die Rückführung des Kondensats in den mit Kondensat oder Kühlflüssigkeit gefüllten Sumpf 178 des Containments 4 erfolgen, wie in FIG. 4 angedeutet ist.

Ferner ist in FIG. 4 noch eine Alternative oder Zusatzmaßnahme zu dem Fördergebläse 18 angedeutet, nämlich ein sogenannter Dampf-Ejektor 180, der nach Art einer Strahlpumpe den Venturi-Effekt einer konvergent-divergenten Düse ausnutzt, um die in einem unter Druck stehenden Antriebsfluid, hier Dampf, enthaltene Energie in Vortrieb und Kompression des zugleich in der Düse angesaugten und mitgerissenen Gasstroms in der Rückführungsleitung 128 umzusetzen. Der Dampf-Ejektor 180 wird beispielsweise mit passiv erzeugtem Dampf durch Druckentspannung eines Heißwasserkessels 182 angetrieben, wobei die Erhitzung dieses Kessels ihrerseits auf rekuperative Weise durch anfallende Prozesswärme bewirkt sein kann. All die Maßnahmen zielen auf eine weitgehend passive Containment-Kühlung und Inertisierung ab.

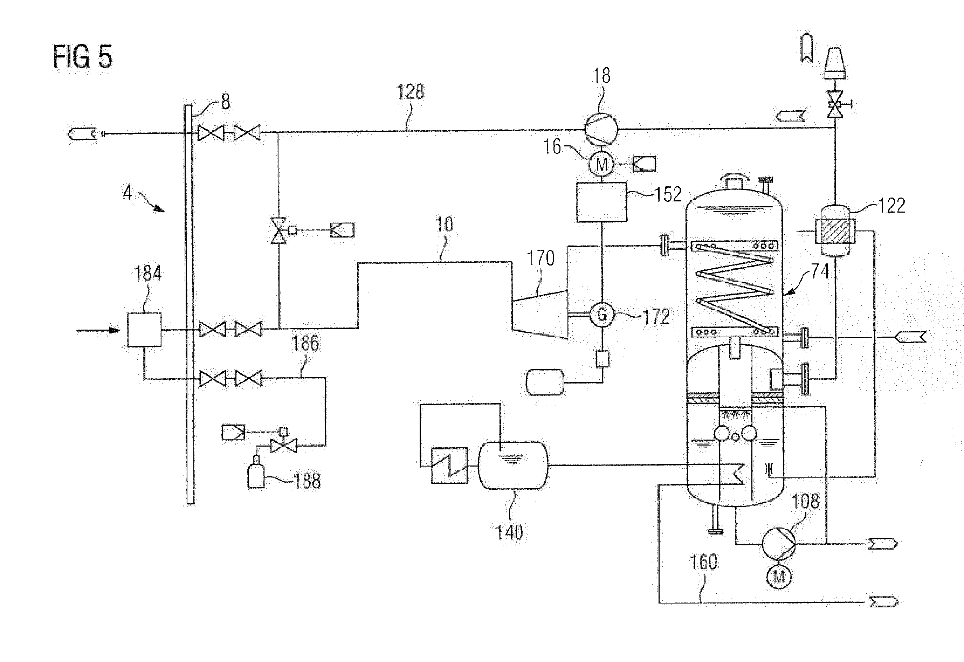

Schließlich ist bei der in FIG. 5 dargestellten, an FIG. 3 anknüpfenden Variante anstelle einer außerhalb des Containments 4 angeordneten Rekombinationsvorrichtung 20 ein Rückgriff auf eine innerhalb des Containments 4 angeordnete, interne Rekombinationsvorrichtung 184 zum Wasserstoffabbau, etwa auch in Kombination mit einer ebenfalls internen Kühlstufe und/oder einer internen Filtereinheit, vorgesehen. Die interne Rekombinationsvorrichtung 184 kann insbesondere von dem in der deutschen Patentanmeldung mit dem amtlichen Aktenzeichen 102012211897.7, angemeldet am 9. Juli 2012 von der AREVA NP GmbH, beschriebenen Typ sein. Der Inhalt dieser Anmeldung wird hiermit zum Bestandteil der vorliegenden Beschreibung erklärt.

Falls erforderlich, insbesondere wenn im Containment 4 Sauerstoffmangel herrscht, kann die interne Rekombinationsvorrichtung 184 von außen mit Sauerstoff O₂ versorgt werden. Dazu ist eine weitere durch die Sicherheitshülle 8 geführte, mit einer Absperrarmatur verschließbare Leitung erforderlich, die als Sauerstoffzufuhrleitung 186 verwendet werden kann. Dazu wird der äußere Anschluss dieser Leitung mit einer Sauerstoffflasche 188 oder dergleichen verbunden. Das innenliegende Ende dieser Leitung befindet sich zweckmäßigerweise im unmittelbareren Einströmbereich der Rekombinationsvorrichtung 184 bzw. direkt bei der Reaktionszone.

**Bezugszeichenliste**

| | | | |
|---|---|---|---|
| 2 | Containment-Schutzsystem | 64 | Sauerstoffflasche |
| 4 | Containment | 66 | Regelventil |
| 6 | kerntechnische Anlage | 68 | Verbindungsleitung |
| 8 | Sicherheitshülle | 70 | Einsprühvorrichtung |
| 10 | Zuleitung | 72 | Leitung |
| 12 | Absperrarmatur | 74 | Kondensationsvorrichtung |
| 14 | Ausströmleitung | 76 | Kühlflüssigkeit |
| 16 | Antriebsmotor | 78 | Ringkühler |
| 18 | Fördergebläse | 80 | Eintrittssammler |
| 20 | Rekombinationsvorrichtung | 82 | Austrittssammler |
| 22 | Leitungsabschnitt | 84 | Spiralrohr |
| 24 | Venturidüse | 86 | Frischwasseranschluss |
| 26 | Vorwärmer | 88 | Kühlflüssigkeitsbehälter |
| 28 | Leitung | 90 | Dampfauslass |
| 30 | Eintrittsstutzen | 91 | Kühlvorrichtung |
| 32 | Reaktionskammer | 92 | Kondensationsbehälter |
| 34 | erste Reaktionszone | 94 | Kondensat |
| 36 | Trägerelement | 96 | Wärmetauscher |
| 38 | Zwischenraum | 98 | Eintrittsbereich |
| 40 | Heizelement | 100 | Strömungskanal |
| 42 | zweite Reaktionszone | 102 | Engstelle |
| 44 | Umfassungswand | 104 | Einsprühvorrichtung |
| 46 | dritte Reaktionszone | 106 | Kondensatentnahmeleitung |
| 48 | ringförmiger Bereich | 108 | Kondensatpumpe |
| 50 | Umfassungswand | 110 | Kondensatrückführleitung |
| 52 | Strömungskanal | 112 | Leitung |
| 54 | Austrittsstutzen | 114 | Leitung |
| 56 | Wärmetauscher | 116 | Gassammelraum |
| 58 | Wärmetauscher | 118 | Filterelement |
| 60 | Kühlzone | 120 | Leitung |
| 62 | Rezirkulationsleitung | 122 | Molekularsieb |
| 124 | Leitung | D | Detail |
| 126 | Leitung | | |
| 128 | Rückführungsleitung | H₂ | Wasserstoff |
| 130 | Absperrarmatur | H₂O | Wasser(-dampf) |
| 132 | Kamin | N₂ | Stickstoff |
| 134 | Ausströmleitung | O₂ | Sauerstoff |
| 136 | Absperrarmatur | | |
| 138 | Verbindungsleitung | | |
| 140 | Vorratsbehälter | | |
| 142 | Leitung | | |
| 144 | Leitung | | |
| 146 | Leitung | | |
| 148 | Leitung | | |
| 150 | Stromversorgungseinheit | | |
| 152 | Batterie | | |
| 154 | Ladeeinheit | | |
| 156 | Verbrennungsmotor | | |
| 158 | Generator | | |
| 160 | Einspeiseleitung | | |
| 162 | Durchführung | | |
| 164 | Anschlussstutzen | | |
| 166 | Kondensationskammer | | |
| 168 | Reaktordruckbehälter | | |
| 170 | Dampfturbine | | |
| 172 | Generator | | |
| 174 | Gasmotor | | |
| 176 | Sprühvorrichtung | | |
| 178 | Sumpf | | |
| 180 | Dampf-Ejektor | | |
| 182 | Heißwasserkessel | | |
| 184 | Rekombinationsvorrichtung | | |
| 186 | Sauerstoffzufuhrleitung | | |
| 188 | Sauerstoffflasche | | |

## Patentansprüche

1. Containment-Schutzsystem (2) zur Behandlung der im Containment (4) einer kerntechnischen Anlage (6), insbesondere eines Kernkraftwerks, befindlichen Atmosphäre bei kritischen Störfällen mit massiver Freisetzung von Wasserstoff / H₂ und Dampf, mit einem zum Anschluss an das Containment (4) vorgesehenen, einen Kreislauf aus dem Containment (4) und wieder zurück ausbildenden Leitungssystem (10, 72, 120, 128) für einen Fluidstrom mit zumindest folgenden strömungsmäßig in Reihe geschalteten Komponenten:
- eine Rekombinationsvorrichtung (20) zur Rekombination von im Fluidstrom enthaltenem Wasserstoff /H₂ mit Sauerstoff / O₂ zu Wasserdampf /H₂O
- eine der Rekombinationsvorrichtung (20) nachgeschaltete Kondensationsvorrichtung (74) zur Kondensation von im Fluidstrom enthaltenen Dampfanteilen mit Mitteln zur Ableitung des Kondensats (94) aus dem Fluidstrom,
- Antriebsmittel (18, 180) für den Fluidstrom,
wobei für eine zumindest teilweise Rückkühlung der Kondensationsvorrichtung (74) ein Wärmetauscher (96) vorhanden ist,
**dadurch gekennzeichnet, dass** der Wärmetauscher eingangsseitig über eine Zufuhrleitung (144) mit einem Vorratsbehälter (140) für ein als Kühlmittel wirksames Inertgas verbunden ist, und dass der Wärmetauscher (96) ausgangsseitig über eine Einspeiseleitung (148, 160) ausgelegt zur Verbindung an das Containment (4) verfügt, so dass das zur Rückkühlung der Kondensationsvorrichtung (74) zugeführte Inertgas anschließend zur Inertisierung des Containments (4) verwendbar ist.

2. Containment-Schutzsystem (2) nach Anspruch 1, wobei der Wärmetauscher (96) als Inertgas-Verdampfer ausgelegt ist.

3. Containment-Schutzsystem (2) nach Anspruch 1 oder 2, wobei das Inertgas Stickstoff / N₂ ist.

4. Containment-Schutzsystem (2) nach einem der Ansprüche 1 bis 3, wobei die Rekombinationsvorrichtung (20) mehrere strömungsmäßig in Reihe geschaltete katalytische Reaktionszonen (34, 42, 46) aufweist, und wobei zumindest eine der Reaktionszonen (34) durch elektrische Heizelemente (40) beheizbar ist.

5. Containment-Schutzsystem (2) nach Anspruch 4, wobei die elektrisch beheizte Reaktionszone (34) mehrere konzentrisch um eine gemeinsame Längsachse angeordnete, durch strömungsführende Zwischenräume (38) voneinander beabstandete, katalytisch beschichtete Trägerelemente (36) mit jeweils ringförmigem Querschnitt umfasst.

6. Containment-Schutzsystem (2) nach einem der Ansprüche 1 bis 5, wobei der Rekombinationsvorrichtung (20) eine Venturidüse (24) strömungsmäßig vorgeschaltet ist.

7. Containment-Schutzsystem (2) nach einem der Ansprüche 1 bis 6, wobei ein Vorratsbehälter (64, 188) für Sauerstoff /O₂ vorhanden ist, der über eine Sauerstoffzufuhrleitung (68, 186) der Rekombinationsvorrichtung (20) zuführbar ist.

8. Containment-Schutzsystem (2) nach einem der Ansprüche 1 bis 7, wobei eine Rezirkulationsleitung (62) vorhanden ist, durch die ein Teilstrom des die Rekombinationsvorrichtung (20) ausgangsseitig verlassenden Fluidstroms zu deren Eingangsseite rückführbar ist.

9. Containment-Schutzsystem (2) nach einem der Ansprüche 1 bis 8, wobei die Kondensationsvorrichtung (74) einen Kondensationsbehälter (92) aufweist, dem eine Kühlvorrichtung (91) für den Fluidstrom vorgeschaltet ist, wobei die Kühlvorrichtung (91) für eine Rückkühlung durch Verdampfung einer Kühlflüssigkeit, vorzugsweise Wasser, ausgelegt ist.

10. Containment-Schutzsystem (2) nach einem der Ansprüche 1 bis 9, wobei in die Kondensationsvorrichtung (74) eine Nasswäschereinheit für den Fluidstrom integriert ist.

11. Containment-Schutzsystem (2) nach einem der Ansprüche 1 bis 10, wobei als Antriebsmittel für den Fluidstrom ein elektrisch angetriebenes Fördergebläse (18) vorhanden ist.

12. Containment-Schutzsystem (2) nach einem der Ansprüche 1 bis 11, wobei als Antriebsmittel für den Fluidstrom ein durch Expansion des Inertgases aus dem Vorratsbehälter (140) angetriebenes Fördergebläse (18) vorhanden ist.

13. Containment-Schutzsystem (2) nach einem der Ansprüche 1 bis 12, welches als Antriebsmittel für den Fluidstrom einen Dampf-Ejektor (180) aufweist, der mit Wasserdampf aus einem rekuperativ erhitzten Heißwasserkessel (182) angetrieben wird.

14. Containment-Schutzsystem (2) nach einem der Ansprüche 1 bis 13, welches eine durch den Fluidstrom angetriebene Dampfturbine (170) aufweist, die zwischen die Rekombinationsvorrichtung (20) und die Kondensationsvorrichtung (74) geschaltet ist, und die ihrerseits einen Generator (172) zur Erzeugung der zum Betrieb des Containment-Schutzsystems (2) benötigten elektrischen Energie antreibt.

15. Verfahren zum Betreiben eines Containment-Schutzsystems (2) nach einem der Ansprüche 1 bis 14, wobei das bei der Rückkühlung der Kondensationsvorrichtung (74) und gegebenenfalls weiterer Komponenten des Containment-Schutzsystems (2) verdampfte Inertgas zumindest teilweise zur Inertisierung in das Containment (4) und/oder das Reaktorgebäude geleitet wird.

16. Verfahren nach Anspruch 15, bei dem der Fluidstrom und/oder das Kondensat im Wesentlichen vollständig in das Containment (4) zurückgeführt werden und keine Emission in die Umgebung erfolgt.

## Claims

1. A containment protection system (2) for treating the atmosphere present in the containment (4) of a nuclear facility (6), in particular a nuclear power plant, in case of critical incidents involving extensive release of hydrogen/H₂ and steam, having a conduction system (10, 72, 120, 128) for a fluid flow, provided for connection to the containment (4) and forming a circulation out of the containment (4) and back, comprising at least the following components fluidically connected in series:
- a recombination device (20) for recombining hydrogen/H₂ contained in the fluid flow with oxygen/O₂ to form steam/H₂O,
- a condensation device (74) connected downstream of the recombination device (20) for condensing steam fractions contained in the fluid flow, with means for diverting the condensate (94) out of the fluid flow,
- drive means (18, 180) for the fluid flow,
a heat exchanger (96) being provided for an at least partial recooling of the condensation device (74),
**characterized in that**
the heat exchanger is connected on the inlet side, via a feed line (144), with a storage container (140) for an inert gas acting as a coolant, and that the heat exchanger (96) has on the outlet side a feed line (148, 160), designed for being connected to the containment (4), so that the inert gas fed for recooling the condensation device (74), can afterwards be used for inerting the containment (4).

2. The containment protection system (2) of claim 1, wherein the heat exchanger (96) is designed as an inert-gas evaporator.

3. The containment protection system (2) of claim 1 or 2, wherein the inert gas is nitrogen/N₂.

4. The containment protection system (2) of any of claims 1 to 3, wherein the recombination device (20) includes several catalytic reaction zones (34, 42, 46) fluidically switched in series and wherein at least one of the reaction zones (34) can be heated by means of electric heating elements (40).

5. The containment protection system (2) of claim 4, wherein the electrically heatable reaction zone (34) comprises several catalytically coated carrier elements (36), each having an annular cross-section, arranged concentrically around a common longitudinal axis and spaced from each other through flow-carrying clearances (38).

6. The containment protection system (2) of any of claims 1 to 5, wherein a Venturi nozzle (24) is fluidically switched upstream of the recombination device (20).

7. The containment protection system (2) of any of claims 1 to 6, including a storage container (64, 188) for oxygen/O₂ which can be supplied via an oxygen supply line (68, 186) to the recombination device (20).

8. The containment protection system (2) of any of claims 1 to 7, including a recirculation line (62) through which a partial flow of the fluid flow exiting from the outlet side of the recombination device (20) can be returned to the latter's inlet side.

9. The containment protection system (2) of any of claims 1 to 8, wherein the condensation device (74) includes a condensation container (92), upstream of which a cooling device (91) for the fluid flow is switched, the cooling device (91) being designed for a recooling through evaporation of a cooling liquid, preferably water.

10. The containment protection system (2) of any of claims 1 to 9, wherein a wetscrubber unit for the fluid flow is integrated in the condensation device (74).

11. The containment protection system (2) of any of claims 1 to 10, including an electrically driven pneumatic conveyer (18) as a drive means for the fluid flow.

12. The containment protection system (2) of any of claims 1 to 11, including a pneumatic conveyer (18) driven by the expansion of the inert gas from the storage container (140), as a drive means for the fluid flow.

13. The containment protection system (2) of any of claims 1 to 12, including a steam ejector (180) driven by water steam from a recuperatively heated hot-water boiler (182), as a drive means for the fluid flow.

14. The containment protection system (2) of any of claims 1 to 13, including a steam turbine (170) driven by the fluid flow, which is switched between the recombination device (20) and the condensation device (74) and which, in turn, drives a generator (172) for generating the electric energy required for operating the containment protection system (2).

15. A method for operating a containment protection system (2) of any of claims 1 to 14, wherein the inert gas evaporated during the recooling of the condensation device (74) and possibly of further components of the containment protection system (2) is conducted, at least partially, into the containment (4) and/or the reactor building, for the purpose of inerting.

16. The method of claim 15, wherein the fluid flow and/or the condensate are returned into the containment (4) substantially completely and no emission into the environment occurs.

## Revendications

1. Système de protection de confinement (2) pour traiter l'atmosphère présent dans le confinement (4) d'une installation nucléaire (6), en particulier d'une centrale nucléaire, dans le cas d'incidents critiques avec un fort dégagement d'hydrogène/H₂ et de vapeur,
ayant un système de conduite (10, 72, 120, 128) pour un courant de fluide, prévu pour être relié au confinement (4) et formant un circuit hors du confinement (4) et de retour, comprenant au moins les composants suivants reliés en série fluidiquement:
- un dispositif de recombinaison (20) pour recombiner l'hydrogène/H₂ contenu dans le courant de fluide avec de l'oxygène/O₂ pour former du vapeur/H₂O,
- un dispositif de condensation (74) relié en aval du dispositif de recombinaison (20) pour condenser des fractions de vapeur contenues dans le courant de fluide, avec des moyens pour détourner le condensat (94) hors du courant de fluide,
- moyens d'entraînement (18, 180) pour le courant de fluide,
un échangeur thermique (96) étant prévu pour un refroidissement, au moins partiel, du dispositif de condensation (74),
**caractérisé en ce que**
l'échangeur thermique est relié du côté d'entrée, par une conduite d'alimentation (144), à un réservoir de stockage (140) pour un gaz inerte agissant comme fluide de refroidissement, et **en ce que** l'échangeur thermique (96) a, du côté de sortie, une conduite d'alimentation (148, 160), conçue pour être reliée au confinement (4), de façon que le gaz inerte alimenté pour refroidir le dispositif de condensation (74), peut ensuite être utilisé pour inertiser le confinement (4).

2. Système de protection de confinement (2) selon la revendication 1, dans lequel l'échangeur thermique (96) est conçu comme évaporateur de gaz inerte.

3. Système de protection de confinement (2) selon la revendication 1 ou 2, dans lequel le gaz inerte est nitrogène/N₂.

4. Système de protection de confinement (2) selon l'une quelconque des revendications 1 à 3, dans lequel le dispositif de recombinaison (20) comprend plusieurs zones de réaction catalytique (34, 42, 46) reliées en série fluidiquement et dans lequel au moins l'une des zones de réaction (34) peut être chauffée au moyen d'éléments de chauffage électriques (40).

5. Système de protection de confinement (2) selon la revendication 4, dans lequel la zone de réaction (34) chauffable électriquement comprend plusieurs éléments porteurs (36) recouverts catalytiquement, chacun d'eux ayant une coupe transversale annulaire, disposés de façon concentrique autour d'un axe commun longitudinal et espacés l'un de l'autre par des espacements (38) conduisant du courant de fluide.

6. Système de protection de confinement (2) selon l'une quelconque des revendications 1 à 5, dans lequel un tube de Venturi (24) est relié fluidiquement en amont du dispositif de recombinaison (20).

7. Système de protection de confinement (2) selon l'une quelconque des revendications 1 à 6, comprenant un réservoir de stockage (64, 188) pour l'oxygène/O₂ qui peut être alimenté par une conduite d'alimention d'oxygène (68, 186) au dispositif de recombinaison (20).

8. Système de protection de confinement (2) selon l'une quelconque des revendications 1 à 7, comprenant une conduite de recirculation (62) par laquelle un courant partiel du courant de fluide sortant du côté de sortie du dispositif de recombinaison (20) peut être retourné au côté d'entrée de ce dernier.

9. Système de protection de confinement (2) selon l'une quelconque des revendications 1 à 8, dans lequel le dispositif de condensation (74) comprend un réservoir de condensation (92), en amont duquel un dispositif de refroidissement (91) pour le courant de fluide est relié, le dispositif de refroidissement (91) étant conçu pour un refroidissement de retour par évaporation d'un liquide de refroidissement, de préférence, de l'eau.

10. Système de protection de confinement (2) selon l'une quelconque des revendications 1 à 9, dans lequel une unité de lavage au mouillé pour le courant de fluide est integrée dans le dispositif de condensation (74).

11. Système de protection de confinement (2) selon l'une quelconque des revendications 1 à 10, comprenant un déchargeur pneumatique (18) entraîné électriquement en tant que moyen d'entraînement pour le courant de fluide.

12. Système de protection de confinement (2) selon l'une quelconque des revendications 1 à 11, comprenant un déchargeur pneumatique (18) entraîné par l'expansion du gaz inerte du réservoir de stockage (140), en tant que moyen d'entraînement pour le courant de fluide.

13. Système de protection de confinement (2) selon l'une quelconque des revendications 1 à 12, comprenant un éjecteur de vapeur (180) entraîné par du vapeur d'eau d'une chaudière à eau chaude (182) chauffée à récupération en tant que moyen d'entraînement pour le courant de fluide.

14. Système de protection de confinement (2) selon l'une quelconque des revendications 1 à 13, comprenant une turbine à vapeur (170) entraînée par le courant de fluide, qui est montée entre le dispositif de recombinaison (20) et le dispositif de condensation (74) et qui, de son côté, entraîne un générateur (172) pour générer l'énergie électrique requise pour actionner le système de protection de confinement (2).

15. Procédé pour actionner le système de protection de confinement (2) selon l'une quelconque des revendications 1 à 14, dans lequel le gaz inerte évaporé pendant le refroidissement de retour du dispositif de condensation (74) et, le cas échéant, d'autres composants du système de protection de confinement (2) est conduit, au moins en partie, dans le confinement (4) et/ou le bâtiment du réacteur, aux fins d'inertisation.

16. Procédé selon la revendication 15, dans lequel le courant de fluide et/ou le condensat sont retournés dans le confinement (4) de manière essentiellement complète et aucune emission à l'environnement ne se produit.
